Europäisches Patentamt

(19) European Patent Office

Office européen des brevets

(11) Numéro de publication : **0 039 292**
**B1**

(12) FASCICULE DE BREVET EUROPÉEN

(45) Date de publication du fascicule du brevet :
25.07.84

(51) Int. Cl.³ : **D 21 H   5/00**

(21) Numéro de dépôt : 81400660.7

(22) Date de dépôt : 28.04.81

(54) **Matériau en feuille transformable, par moulage, estampage ou thermoformage en un produit fini, comportant des fibres de renforcement, une résine thermoplastique en poudre, et procédé de préparation dudit matériau.**

(30) Priorité : 30.04.80 FR 8009858

(43) Date de publication de la demande :
04.11.81 Bulletin 81/44

(45) Mention de la délivrance du brevet :
25.07.84 Bulletin 84/30

(84) Etats contractants désignés :
AT BE CH DE FR GB IT LI LU NL SE

(56) Documents cités :
EP-A- 0 006 390
GB-A- 2 028 887
US-A- 2 962 414

(73) Titulaire : **ARJOMARI-PRIOUX Société anonyme dite:**
**3 rue du Pont-de-Lodi**
**F-75006 Paris (FR)**

(72) Inventeur : **Vallee, Antoine**
**Favetière**
**F-38850 Charavines (FR)**
Inventeur : **Cortinchi, Henri**
**4 rue A. Briand**
**F-91240 Saint Michel sur Orge (FR)**

(74) Mandataire : **Combe, André et al**
**CABINET BEAU DE LOMENIE 55 rue d'Amsterdam**
**F-75008 Paris (FR)**

## Description

La présente invention concerne un matériau en feuille comportant des fibres de renforcement, une résine thermoplastique en poudre, ledit matériau en feuille étant transformable, notamment par moulage-estampage ou thermoformage, en un produit fini. Elle concerne également un procédé de fabrication dudit matériau en feuille.

On connaît des produits finis (pièces et objets divers) constitués par une résine thermoplastique renforcée à l'aide de fibres de renforcement. On sait qu'une des difficultés pour la production de produits de ce type consiste à préparer un mélange homogène de matière plastique et de fibres de renforcement et à transformer convenablement ce mélange, par des techniques classiques de transformation des matières thermoplastiques, sans altérer les propriétés renforçantes des fibres.

L'invention vise à résoudre une telle difficulté en proposant au technicien un nouveau matériau en feuilles souples comportant des fibres de renforcement et une résine thermoplastique en poudre, lesdites feuilles étant, après empilage éventuel avec d'autres feuilles, transformables par moulage-estampage ou thermoformage en un objet fini présentant les bonnes propriétés physiques d'un thermoplastique renforcé.

Ce matériau en feuille est obtenu au moyen d'une technique classique dans le domaine papetier, c'est-à-dire une technique consitant à floculer de façon convenable une suspension aqueuse contenant les divers ingrédients du mélange, puis à essorer ladite suspension, de façon à réaliser une feuille que l'on soumettra à un séchage convenable.

On sait que les techniques papetières, telles que décrites succinctement ci-dessus, sont essentiellement applicables avec des fibres cellulosiques dont la structure facilite la cohérence de la feuille obtenue aux divers stades de sa fabrication. On sait également que les fibres renforçantes, telles que celles utilisées dans la présente demande, n'ont pas la même structure et ne présentent donc pas les mêmes propriétés que les fibres de cellulose et ne peuvent que très difficilement être utilisées en absence de fibres cellulosiques dans les procédés mettant en œuvre lesdites techniques papetières. On sait enfin que, dans de nombreuses applications, la présence, dans les objets, de fibres cellulosiques n'est pas souhaitable.

Il a été trouvé que l'on pouvait aisément préparer, selon les techniques papetières, des matériaux en feuilles comportant des fibres de renforcement et une résine thermoplastique en poudre en utilisant, comme indiqué ci-après, des fibrilles de polyoléfines.

Les fibres de renforcement utilisables sont des fibres minérales (telles que les fibres de verre, de carbone, de céramique, de bore), les fibres métalliques ou certaines fibres synthétiques organiques à haut point de fusion (polyamides aromatiques, polyesters et autres). Les fibres utilisées peuvent avoir des longueurs jusque vers 30 mm, mais il est préférable d'utiliser des fibres plus courtes, de longueur inférieure à 15 mm. Dans un même matériau, on peut employer plusieurs types de fibres.

Les fibres de verre constituent le matériau de renforcement privilégié.

La résine thermoplastique utilisée peut être une polyoléfine (polyéthylène, polypropylène), du polychlorure de vinyle, du polystyrène, un polyamide ou un polyester.

Dans la préparation des objets finis à partir des matériaux en feuilles selon l'invention, cette résine thermoplastique sera portée à température suffisante pour être plastifiée ou fondue et mise en forme, par exemple par moulage-estampage ou thermoformage ; c'est dire que l'on pourra choisir parmi ces résines thermoplastiques celles ayant des structures (cristallinité par exemple) ou des propriétés de base (indice de fusion) les plus appropriées ; c'est dire également que l'on pourra utiliser ces résines sous leur forme la mieux adaptée (copolymères pour les polystyrènes chocs ou contenant des élastomères pour améliorer leur résistance au choc) et qu'ils pourront éventuellement comporter des additifs (tels que plastifiants par exemple) ; c'est dire également que l'on pourra utiliser des mélanges de ces résines thermoplastiques pour réaliser des alliages plastiques connus.

La résine thermoplastique sera utilisée sous forme de poudre dont les grains ont des dimensions inférieures à 500 μm.

Le choix des fibres de renforcement et de la résine thermoplastique sera tel qu'il y ait au moins environ 50 °C entre les températures de ramollissement (ou de fusion) de ces deux produits. Il convient en effet que, lors de la transformation de ladite feuille (ou d'un empilage de feuilles), transformation qui impliquera une fusion de la résine thermoplastique, les fibres conservent leur structure et, par conséquent, leur pouvoir de renforcement. Les fibres de renforcement et le matériau plastique constituant le « mélange de base » du produit selon l'invention, ledit mélange de base devra comporter de 20 à 95 % en poids de fibres de renforcement et de 80 à 5 % en poids de résine thermoplastique. Des quantités insuffisantes de fibres de renforcement (par exemple moins de 20 % en poids) ne permettent pas, après thermotraitement, l'obtention de produits finaux ayant des propriétés suffisamment améliorées par rapport à celles des matériaux thermoplastiques correspondants ne contenant pas de fibres. Des quantités insuffisantes de résine thermoplastique (par exemple moins de 5 % en poids) ne permettent pas un enrobage convenable des fibres ni une répartition homogène desdites fibres au sein de ce matériau.

Les matériaux en feuilles selon l'invention comporteront en outre de 5 à 25 % en poids, par rapport au mélange de base de « fibrilles de polyoléfines ». Par fibrilles de polyoléfines, on entend les éléments

2

fibreux constitués de polyoléfines pouvant comporter une charge minérale et obtenus soit par raffinage de fibres, soit à partir de solutions de polymère par précipitation en présence de force de scission, soit par détente à travers un orifice à perte de charge contrôlée. Ces fibrilles ont une structure connue et présentent notamment une surface spécifique élevée (supérieure à 1 mètre carré par gramme) qui facilite la rétention des poudres. Les fibrilles de polyoléfines sont commercialisées sous forme de pâtes synthétiques en feuilles feutrées contenant une certaine proportion d'eau, le poids est ici considéré pour des fibres sèches. De telles fibrilles et pâtes de polyoléfines sont décrites par exemple dans les brevets des Etats-Unis d'Amérique 3 743 272, 3 987 139 et 4 007 247. Lorsque les matériaux comportent une quantité insuffisante de ces « fibrilles de polyoléfines » (soit moins de 5 % en poids par rapport au mélange de base), la feuille de papier que l'on peut obtenir en mettant en œuvre les techniques papetières ne présente plus la résistance mécanique nécessaire pour être tirée sur la machine à papier ; de plus la rétention de la résine thermoplastique, que l'on apporte sous forme de poudre, est insuffisante.

Lors de la préparation des produits finis à partir des matériaux en feuilles selon l'invention, ces « fibrilles de polyoléfines » subiront une fusion, comme la résine thermoplastique en poudre utilisée avec laquelle elles se mélangeront de façon intime.

Les feuilles selon l'invention comporteront, en outre, un liant utilisé à raison de 5 à 30 % en poids par rapport au poids du mélange de base.

Ce liant assure la liaison des constituants de la feuille thermoplastique entre eux et peut renforcer, le cas échéant, les propriétés physiques de la feuille. Parmi les liants qui conviennent, on peut notamment citer ceux du tableau I ci-après. Les liants préférés sont les latex (acryliques, styrènes, styrène-butadiène).

Ce liant agit, par floculation, en créant un lien entre les divers éléments du mélange dès l'adjonction audit mélange d'un agent floculant. On pourra de plus utiliser, en vue de renforcer la résistance mécanique de la feuille humide, jusqu'à 10 % en poids par rapport au mélange de base de fibres d'alcool polyvinylique ; ces fibres seront choisies de façon que, peu solubles dans l'eau à froid, elles se solubiliseront à une température inférieure à 100 °C lorsque la feuille, encore humide, sera chauffée. Cette solubilisation des fibres d'alcool polyvinylique donnera naissance à un liant supplémentaire qui pourra améliorer les propriétés de la feuille séchée lors des manipulations ultérieures.

Les feuilles selon l'invention comporteront également au moins un floculant (0,2 à 10 parties en poids pour 100 parties en poids du mélange de base).

Parmi les floculants qui conviennent, on peut notamment mentionner les sels métalliques, tels que notamment les sels d'aluminium, de fer (II), de fer (III), de zinc et de chrome, tels que les halogénures, sulfates et phosphates et les autres substances indiquées dans le tableau II ci-après. Le floculant préféré selon l'invention est le polychlorure d'aluminium qui est une substance également connue sous le nom d'hydroxychlorure d'aluminium, qui a pour formule générale $(OH)_y Al_x Cl_{x-y-x}$ et qui est notamment commercialisée par la Société PECHINEY UGINE KUHLMANN sous le nom de marque « WAC ».

Les feuilles selon l'invention pourront également comporter, si cela paraît souhaitable, divers additifs tels que des antioxydants, des pigments, etc. Elles pourront comporter aussi des charges diverses, notamment des charges minérales ou organiques qui permettront de modifier, comme connu, certaines propriétés des produits finis ; on pourra utiliser jusqu'à 50 % en poids, par rapport au mélange de base, de telles charges minérales.

Des dispersants sont aussi utilisés pour favoriser la dispersion des fibres dans l'eau ; parmi les dispersants utilisables, les produits les plus intéressants sont les dispersants cationiques qui présentent l'avantage de jouer, dans une certaine manière, le rôle d'un premier agent floculant ; comme dispersant cationique particulièrement intéressant, on peut citer les produits de condensation d'acides gras.

Le procédé pour la réalisation des feuilles selon l'invention est caractérisé en ce que l'on effectue un mélange des divers ingrédients qui constituent les feuilles et que l'on ajoute audit mélange au moins une partie de l'agent floculant.

Cette addition d'agent floculant comme ultime étape du procédé est importante de façon à réaliser une bonne répartition des divers constituants dans le produit final.

Ce floculant peut être introduit dans le mélange en une seule fraction ou en deux fractions ; dans ce dernier cas, la première fraction du floculant est ajoutée au mélange avant l'adjonction, à ce mélange, du liant.

Lorsque le floculant est introduit en deux fractions, la première fraction du floculant, qui est introduite avant le liant, et le liant assurent une première agglomération des constituants. La deuxième fraction du floculant a pour objet de renforcer la cohésion des constituants et améliorer ainsi la rétention sur la machine à papier et la résistance des flocs. Bien entendu, on peut utiliser soit le même agent floculant avant et après le liant, soit encore des agents floculants différents, soit enfin des mélanges d'agents floculants.

Pour la réalisation du mélange, on effectuera tout d'abord un mélange relativement concentré dans de l'eau en ajoutant successivement l'agent dispersant puis les fibres de renforcement, puis la pâte de polyoléfine, puis la résine thermoplastique en poudre, puis éventuellement une partie de l'agent floculant, puis le liant, puis le reste de l'agent floculant.

On effectuera ensuite une dilution de ce mélange relativement concentré jusqu'à obtenir une suspension aqueuse contenant environ 0,01 à 5 % de produits solides.

Lorsqu'on utilise, comme fibres de renforcement, des fibres de verre, la dilution prévue ci-dessus

3

**0 039 292**

entraîne parfois une réagglomération des fibres entre elles ; pour éviter ce phénomène, on pourra avantageusement acidifier le milieu (par exemple par adjonction d'acide sulfurique) jusqu'à obtention d'un pH de l'ordre de 2 à 4.

Lorsque le mélange convenable a été obtenu, ce mélange est traité sur les machines connues de fabrication du papier (essorage, séchage, etc.).

L'invention permet ainsi de préparer des feuilles sèches, souples, autoportantes, facilement manipulables, ayant une épaisseur pouvant varier entre environ 0,5 et environ 5 mm au plus. Ces feuilles sont spécialement utilisées pour la préparation de divers objets ; cette préparation s'effectuera par chauffage (chauffage suffisant pour provoquer la fusion de la résine thermoplastique et de la pâte de polyoléfine contenues dans les feuilles) et mise en forme par moulage, estampage ou thermoformage des feuilles (feuille unique ou empilement de feuilles) obtenues. Le procédé préféré consistera dans une opération de moulage-estampage d'un empilement de feuilles selon l'invention.

Les exemples non limitatifs ci-après illustrent l'invention.

### Exemple 1

Dans un litre d'eau contenant 0,2 % d'un agent dispersant cationique à base d'acide gras (Cartaspers® DSI de Sandoz) qui joue également le rôle d'agent floculant de la poudre, on ajoute 40 g de fibres de verre, ayant une longueur moyenne de 4,5 mm, sous agitation forte. On introduit ensuite, sous agitation modérée, 10 g de pâte synthétique de polyéthylène. Après dispersion convenable, on ajoute 60 g de poudre de polypropylène de granulométrie moyenne 50. On ajoute un agent antimousse, puis 10 g sec de liant qui est un polymère de type acrylique référence L1 dans le tableau I. Toujours sous agitation, on ajoute 2 g sec de sulfate d'alumine en tant que $2^e$ agent floculant. Après dilution jusqu'à ce que la suspension contienne environ 5 g de solides par litre et ajout d'acide sulfurique pour un pH de 2,5, le mélange est ensuite admis sur une toile, essoré puis séché selon la technique classique du papier ; la seule précaution à prendre est d'utiliser de faibles forces de traction sur la feuille en cours de séchage. On obtient ainsi une feuille de 500 g/m² qui comporte une cohésion suffisante pour être manipulée, stockée, transportée et dans laquelle ont été parfaitement retenus les divers composants de la formulation.

Pour réaliser à partir de cette feuille un produit industriel final, on peut, par exemple, superposer une dizaine de feuilles de ce type et, après avoir réalisé un préchauffage jusqu'à une température de l'ordre de 180 à 210 °C, à mouler l'ensemble sous des pressions de 40 à 100 bar pour un cycle de moins de 30 secondes.

### Exemple 2

Cet exemple se distingue du précédent en ce que les fibres de verre ont une longueur de 12 mm, et sont pour cette raison dispersées à une dilution poussée à 10 g/l, et en ce qu'on rajoute 0,5 % de WAC dans le mélange juste avant la formation de la feuille de manière à maintenir un haut degré de rétention.

### Exemple 3

Il se distingue de l'exemple 1 en ce que les fibres de verre et la poudre de polypropylène sont mélangées dans les quantités respectives de 20 g et 80 g par litre d'eau, et en ce que l'on ajoute 0,5 % de WAC dans le mélange juste avant la formation de la feuille de manière à maintenir un haut degré de rétention.

### Exemple 4

Dans 150 litres d'eau contenant 0,04 % d'un agent dispersant cationique à base d'acides gras (Cartaspers DS1 de Sandoz) qui joue également le rôle de floculant de la poudre, on ajoute sous agitation forte 600 g de fibres de verre à ensimage sensible à l'eau ayant une longueur moyenne de 6,5 mm et un diamètre de 11 µm. On y introduit ensuite sous agitation modérée 300 g de pâte synthétique de polyéthylène dans 50 litres d'eau. Après dispersion convenable on ajoute 900 g de poudre d'un polypropylène d'indice de fluidité 3 et d'une granulométrie moyenne de 80 microns. On ajoute un agent antimousse puis 300 g sec de liant qui est un polymère de type acrylique référencé L1 dans le tableau I. Toujours sous agitation, on ajoute 30 g sec de sulfate d'alumine en tant que second agent floculant. Après dilution jusqu'à ce que la suspension comporte environ 5 g de matières solides par litre et ajout d'acide sulfurique pour un pH de 2,5, le mélange est ensuite admis sur une machine à papier avec addition, juste avant la formation de la feuille, de 0,5 % de WAC.

On obtient ainsi une feuille souple de 500 g/m² qui comporte une cohésion suffisante pour être manipulée, stockée, transportée et dans laquelle ont été parfaitement retenus les divers composants de la formulation. La feuille a une épaisseur d'environ 1,6 mm.

Entre autres applications, le technicien des matières plastiques pourra transformer une pile de plusieurs flans découpés dans une telle feuille, par moulage, estampage vers 200 °C, après préchauffage

4

préalable, sous des pressions de 40 à 100 bar pour un cycle de moins de 30 s, en une pièce complexe thermoplastique renforcée de 30 % de fibres de verre présentant à 20 °C un module en flexion de 2 500 mégapascals (MPa), une résistance à la traction de 50 mégapascals ainsi qu'une très bonne résistance au choc.

### Exemple 5

Cet exemple se distingue de l'exemple 4 en ce que les fibres de verre ont une longueur de 13 mm et que la feuille ainsi obtenue permet d'obtenir des pièces en polyoléfines renforcées de fibres de verre à module en flexion de 3 400 MPa et résistance à la traction de 80 MPa à 20 °C.

### Exemple 6

Il se distingue de l'exemple 4 en ce que les fibres de verre et la poudre thermoplastique sont mélangées dans les quantités respectives de 825 g et 675 g, que la pâte synthétique est de polypropylène et en ce qu'enfin poudre et pâte sont de polypropylène d'indice de fluidité 5. Le polypropylène renforcé à 40 % de fibres de verre, moulé par estampage à partir d'un tel matériau, a un module en flexion de 3 700 MPa et une résistance à la traction de 60 MPa.

### Exemple 7

Il diffère de l'exemple 4 en ce que les fibres de verre 6,5 mm ont un ensimage plastique et que l'on utilise 10 % en poids par rapport au mélange de base de fibres d'alcool polyvinylique de longueur 4 mm et de température de solubilisation dans l'eau 60 °C. La feuille de 500 g/m², parfaitement isotrope, a une résistance à la traction légèrement supérieure à 2 décanewtons/15 mm.

### Exemple 8

Il se distingue de l'exemple 7 en ce que la fibre de verre est celle de l'exemple 4 et en ce que la poudre de polypropylène a une granulométrie plus grossière centrée sur 250 µm, le matériau en feuille présentant les mêmes qualités à la manipulation et donnant, après transformation thermoplastique, un matériau dont, à 20 °C, le module de flexion est de 4 000 MPa et la résistance à la traction de 61 MPa.

### Exemple 9

La formulation diffère de celle de l'exemple 7 en ce que les fibres de verre sont des fibres broyées.

### Exemple 10

La composition se distingue de celle de l'exemple 7 en ce qu'on ajoute, par rapport au mélange de base, 40 parties en poids d'un talc de granulométrie moyenne 0,85 µm.

### Exemple 11

Cet exemple se distingue de l'exemple 7 en ce que les fibres de verre et la poudre de polypropylène sont mélangées dans les quantités respectives de 300 g et 1 200 g pour donner après thermotraitement un produit renforcé de seulement 15 % de fibres de verre.

### Exemple 12

Cet exemple se distingue de l'exemple 4 en ce que les quantités de fibres de verre et de poudre de polypropylène sont respectivement 1 425 g et 75 g et que le matériau en feuille obtenu est transformable par thermoformage en des éléments renforcés de 70 % de fibres de verre.

### Exemple 13

Il se distingue de l'exemple 4 en ce qu'on utilise à la place d'une poudre de polypropylène :
— soit une poudre de polyamide 12 de granulométrie inférieure à 25 µm,
— soit une poudre de polychlorure de vinyle de granulométrie inférieure à 60 µm,
— soit une poudre de polystyrène de granulométrie inférieure à 100 µm.

### Exemple 14

Cet exemple se distingue de l'exemple 4 en ce que la pâte de polyoléfine est de polypropylène d'indice de fluidité 5, qu'on utilise 5 % par rapport au mélange de base de fibres d'alcool polyvinylique de longueur 4 mm et de température de solubilisation dans l'eau 60 °C, mais surtout en ce qu'on remplace la poudre de polypropylène par une poudre de polybutylènetéréphtalate.

## Exemple 15

Cet exemple diffère des exemples précédents en ce que les fibres de renforcement ne sont plus de verre mais de céramique d'un diamètre moyen 3 μm et sont dispersées à pH 2,5 pour 55 parties en poids ; le reste du mélange de base est une poudre de polypropylène ; tous les autres composants sont ensuite introduits à pH neutre et le tout est essoré sur toile, séché dans les mêmes proportions et conditions qu'à l'exemple 4.

## Exemple 16

Dans cet exemple, le mélange de base est constitué pour 45 parties en poids d'un renfort de poly-para-phénylène-diamine-téréphtalamide 2 mm, le reste étant une poudre de polybutylène téréphtalate. La pâte est du polypropylène. Cette pâte et le liant L1 sont ajoutés à raison chacun de 5 % de ce mélange. On a ainsi réalisé une feuille très facilement manipulable et estampable à chaud.

## Exemple 17

On répète l'exemple 4 en remplaçant les fibres de verre par des fibres de poly-para-phénylènediamine-téréphtalamide de 6 mm et la résine thermoplastique par une poudre de polyamide 12 de granulométrie inférieure à 25 μm.

## Exemple 18

On répète l'exemple 4 en utilisant au lieu des fibres de verre des fibres de carbone de 5 mm ; de plus, par rapport au mélange de base, on a utilisé 25 parties en poids de liant L1.

Tableau I

Exemples de liants

| L 1 | Polymère renfermant 87 à 90 parties en poids de motif acrylate d'éthyle, 1 à 8 parties en poids de motif acrylonitrile, 1 à 6 parties en poids de motif N-méthylolacrylamide et 1 à 6 parties en poids de motif acide acrylique.<br>Dispersion aqueuse à 40-55%. |
|---|---|
| L 2 | Polymère renfermant 60 à 75 parties en poids de motif acrylate d'éthyle, 5 à 15 parties en poids de motif acrylonitrile, 10 à 20 parties en poids de motif acrylate de butyle, 1 à 6 parties en poids de motif N-méthylolacrylamide.<br>Dispersion aqueuse à 40-55%. |
| L 3 | Polymère renfermant 60 à 65 parties en poids de motif butadiène, 35 à 40 parties en poids de motif acrylonitrile et 1 à 7 parties en poids de motif acide méthacrylique.<br>Dispersion aqueuse à 40-55%. |
| L 4 | Polymère renfermant 38 à 50 parties en poids de motif styrène, 47 à 59 parties en poids de motif butadiène et 1 à 6 parties en poids de motif méthylacrylamide.<br>Dispersion aqueuse à 40-55%. |
| L 5 | Polymère renfermant 53 à 65 parties en poids de motif styrène, 32 à 44 parties en poids de motif butadiène et 1 à 6 parties en poids de motif méthylacrylamide.<br>Dispersion aqueuse à 40-55%. |

6

Tableau II

Agents floculants

| Référence | Type de floculants |
|-----------|--------------------|
| P 1 | Sulfate d'aluminium |
| P 2 | Polychlorure d'aluminium (hydroxychlorure d'aluminium) |
| P 3 | Aluminate de sodium et de calcium |
| P 4 | Mélange d'acide polyacrylique et de polyacrylamide en solution à 5-30% (poids/volume) |
| P 5 | Polyéthylèneimine en solution à 2-50% (poids/volume) |
| P 6 | Copolymère d'acrylamide et de -φ-méthacrylyloxyéthyl-triméthylammoniumméthylsulfate |
| P 7 | Résine polyamine-épichlorhydrine et diamine propyl-méthylamine en solution à 2-50% |
| P 8 | Résine polyamide-épichlorhydrine fabriquée à partir d'épichlorhydrine, d'acide adipique, de caprolactame, de diéthylènetriamine et/ou d'éthylènediamine, en solution à 2-50% |
| P 9 | Résine polyamide-polyamine-épichlorhydrine fabriquée à partir d'épichlorhydrine, d'ester diméthylique d'acide adipique et de diéthylènetriamine, en solution à 2-50% |
| P 10 | Résine polyamide-épichlorhydrine fabriquée à partir d'épichlorhydrine, de diéthylènetriamine, d'acide adipique et d'éthylèneimine |
| P 11 | Résine polyamide-épichlorhydrine fabriquée à partir d'acide adipique, de diéthylènetriamine et d'un mélange d'épichlorhydrine et de diméthylamine en solution à 2-50% |
| P 12 | Résine polyamide-polyamine cationique fabriquée à partir de triéthylènetriamine |
| P 13 | Produits de condensation d'acides sulfoniques aromatiques avec le formaldéhyde |
| P 14 | Acétate d'aluminium |
| P 15 | Formiate d'aluminium |
| P 16 | Mélange d'acétate, sulfate et formiate d'aluminium |
| P 17 | Chlorure d'aluminium ($AlCl_3$) |
| P 18 | Amidon cationique |

Note : Lorsqu'il est question de solutions, il s'agit de solutions aqueuses.

## Revendications

1. Matériau en feuille utilisé dans un procédé de moulage, estampage-moulage ou thermoformage impliquant fusion de la résine thermoplastique contenue dans ledit matériau et préparé par la technique papetière, caractérisé en ce qu'il comporte :
— un mélange de base formé de 20 à 95 % en poids de fibres de renforcement et de 80 à 5 % en poids de résine thermoplastique, en poudre,
— de 5 à 25 % en poids, par rapport à ce mélange de base de « fibrilles de polyoléfine »,
— de 5 à 30 % en poids par rapport à ce mélange de base d'un liant tel qu'utilisé dans l'industrie du papier, et

7

**0 039 292**

— de 0,2 à 10 % en poids par rapport à ce mélange de base d'au moins un agent floculant.

2. Matériau en feuille selon la revendication 1, caractérisé en ce qu'il peut en outre comporter :
— des fibres solubles à chaud d'alcool polyvinylique,
— au moins une charge minérale ou organique,
— un agent dispersant, notamment un dispersant cationique, et
— au moins un additif tel qu'un antioxydant, un pigment, etc.

3. Matériau en feuille selon l'une des revendications 1 et 2, caractérisé en ce que les fibres de renforcement sont des fibres de verre de longueur inférieure à 30 mm.

4. Matériau en feuille selon l'une des revendications 1 à 3, caractérisé en ce que la résine thermoplastique est utilisée sous forme d'une poudre dont les grains ont des dimensions moyennes inférieures à 500 μm.

5. Procédé de préparation d'un matériau en feuille selon l'une des revendications 1 à 4, caractérisé en ce que l'on effectue un mélange des divers constituants du mélange et que l'on ajoute audit mélange au moins une partie de l'agent floculant.

6. Procédé selon la revendication 5, caractérisé en ce que le mélange des divers constituants du mélange est réalisé par adjonction successive, dans de l'eau, éventuellement d'un agent dispersant, des fibres de renforcement, des fibrilles de polyoléfine, de la résine thermoplastique, éventuellement d'une partie de l'agent floculant, le liant, puis le reste de l'agent floculant.

7. Procédé selon l'une des revendications 5 et 6, caractérisé en ce que le mélange et la floculation dudit mélange sont réalisés en milieu relativement concentré puis que le mélange est dilué de façon à obtenir une suspension aqueuse contenant 0,01 à 5 % en poids de solide.

8. Procédé selon la revendication 7, caractérisé en ce qu'au cours de la dilution le mélange est acidifié, de préférence par de l'acide sulfurique, jusqu'à un pH compris entre environ 2 et 4.

## Claims

1. Material in sheet form used by a process of moulding, stamping-moulding or heat-shaping involving melting of the thermoplastic resin contained in said material and prepared by the papermaking technique, characterized in that it comprises :
— a basic mixture formed by 20 to 95 % by weight of reinforcing fibres and from 80 to 5 % by weight of thermoplastics resin in powder form,
— from 5 to 25 % by weight, with respect to this basic mixture, of « polyolefin fibrillae »,
— from 5 to 30 % by weight, with respect to this basic mixture, of a binding agent such as used in the papermaking industry, and
— from 0.2 to 10 % by weight, with respect to this basic mixture, of at least one flocculating agent.

2. The material in sheet form according to claim 1, characterized in that it may further comprise :
— polyvinyl alcohol fibres soluble hot,
— at least one mineral or organic filler
— a dispersant agent, particularly a cationic dispersant, and
— at least one additive such as an antioxidant, a pigment, etc...

3. The material in sheet form according to any one of claims 1 and 2, characterized in that the reinforcing fibres are glass fibres of length less than 30 mm.

4. The material in sheet form according to any one of claims 1 to 3, characterized in that the thermoplastics resin is used in the form of a powder of which the particles have mean dimensions smaller than 500 μm.

5. Process for preparing the material in sheet form according to any one of claims 1 to 5, characterized in that mixing of the various constituents of the mixture is effected and that at least a part of the flocculating agent is added to the said mixture.

6. The process according to claim 5, characterized in that the various constituents of the mixture are mixed by the successive addition, in water, possibly of a dispersant agent, of the reinforcing fibres, of the polyolefin pulp, of the thermoplastic resin, possibly of a part of the flocculating agent, the binding agent, then the rest of the flocculating agent.

7. The process according to any one of claims 5 and 6, characterized in that the mixture and flocculation of said mixture are effected in a relatively concentrated medium then the mixture is diluted so as to obtain an aqueous suspension containing 0.01 to 5 % by weight of solid.

8. The process according to claim 7, characterized in that in the course of the dilution, the mixture is acidified, preferably by sulfuric acid, up to a pH of between about 2 and 4.

## Ansprüche

1. Folienmaterial zur Verwendung in einem Formguß-, Preßguß- oder Wärmeformverfahren, bei welchem das im Material enthaltene thermoplastische Harz schmilzt, hergestellt nach der Papiererzeugungsmethode, dadurch gekennzeichnet, daß es folgendes umfaßt :

— eine Basismischung, bestehend aus 20 bis 95 Gew.-% Verstärkungsfasern und 80 bis 5 Gew.-% thermoplastischem Harz in Pulverform,

— 5 bis 25 Gew.-% — bezogen auf diese Basismischung — an « Polyolefinfibrillen »,

— 5 bis 30 Gew.-% eines Bindemittels, wie es in der Papierindustrie verwendet wird, bezogen auf diese Basismischung, und

— 0,2 bis 10 Gew.-% zumindest eines Flockungsmittels, bezogen auf diese Basismischung.

2. Folienmaterial nach Anspruch 1, dadurch gekennzeichnet, daß es weiters folgendes umfassen kann :

— heiß lösliche Polyvinylalkoholfasern,

— zumindest einen mineralischen oder organischen Füllstoff,

— ein Dispergierungsmittel, insbesondere ein kationisches Dispergierungsmittel, und

— zumindest einen Zusatzstoff, wie ein Antioxidans, ein Pigment, etc.

3. Folienmaterial nach einem der Ansprüche 1 und 2, dadurch gekennzeichnet, daß die Verstärkungsfasern Glasfasern einer Länge von weniger als 30 mm sind.

4. Folienmaterial nach einem der Ansprüche 1 bis 3, dadurch gekennzeichnet, daß das thermoplastische Harz in Pulverform verwendet wird, wobei die Korner durchschnittliche Ausmaße von weniger als 500 $\mu$m haben.

5. Verfahren zur Herstellung eines Folienmaterials nach einem der Ansprüche 1 bis 4, dadurch gekennzeichnet, daß eine Mischung aus den verschiedenen Mischungsbestandteilen hergestellt wird und zu dieser Mischung zumindest ein Teil des Flockungsmittels zugegeben wird.

6. Verfahren nach Anspruch 5, dadurch gekennzeichnet, daß die Mischung aus den verschiedenen Mischungsbestandteilen durchgeführt wird, indem in Wasser nacheinander gegebenenfalls ein Dispergierungsmittel, Verstärkungsfasern, Polyolefinfibrillen, thermoplastisches Harz, gegebenenfalls ein Teil des Flockungsmittels, das Bindemittel und zuletzt der Rest des Flockungsmittels zugegeben werden.

7. Verfahren nach einem der Ansprüche 5 und 6, dadurch gekennzeichnet, daß die Mischung und die Flockung der Mischung in relativ konzentriertem Milieu durchgeführt werden, worauf die Mischung derart verdünnt wird, daß eine 0,01 bis 5 Gew.-% Feststoff enthaltende wässerige Suspension erhalten wird.

8. Verfahren nach Anspruch 7, dadurch gekennzeichnet, daß die Mischung während der Verdünnung, vorzugsweise mit Schwefelsäure, bis zu einem pH-Wert zwischen etwa 2 und 4 angesäuert wird.